# EUROPÄISCHE PATENTSCHRIFT

(11) **EP 1 345 692 B1**
(45) Veröffentlichungstag und Bekanntmachung des Hinweises auf die Patenterteilung: **04.05.2005**
(21) Anmeldenummer: 01995706.7
(22) Anmeldetag: 20.12.2001
(51) Int. Cl.: B01J 35/06, B01J 37/02, B01D 53/86, H01M 4/90

(54) **PARTIKEL-FASER-AGGLOMERATE**
PARTICLE-FIBRE-AGGLOMERATES
AGGLOMERATS FIBRES-PARTICULES

(30) Priorität: 21.12.2000 DE 10064409
(43) Veröffentlichungstag der Anmeldung: 24.09.2003
(73) Patentinhaber: BASF AKTIENGESELLSCHAFT, 67056 Ludwigshafen (DE)
(72) Erfinder: HÖLZLE, Markus, 67281 Kirchheim (DE); HESSE, Michael, 67549 Worms (DE); HARTH, Klaus, 67317 Altleiningen (DE); NETH, Norbert, 67240 Bobenheim-Roxheim (DE)
(86) Internationale Anmeldenummer: PCT/EP2001/015146
(87) Internationale Veröffentlichungsnummer: WO 2002/049759

(56) Entgegenhaltungen:
- EP-A- 0 336 882
- WO-A-94/16817
- US-A- 5 179 061
- US-A- 5 620 669

## Beschreibung

Die vorliegende Erfindung betrifft Partikel-Faser-Agglomerate (PFA = particle-fibre-agglomerates), die Fasern mit der Struktur von Einzelfasern, Faserbündeln, Faserbüscheln oder deren Gemische mit fest anhaftenden Partikeln enthalten.

Es gibt eine Vielzahl von Prozessen, bei denen Betten aus Feststoffteilchen von Flüssigkeiten oder Gasen durchströmt werden. Beispiele sind, Gastrocknung- und Gasreinigungsprozesse mit Festbetten, die Adsorbentien oder Molekularsiebe enthalten, die Wasseraufbereitung in Ionenaustauscheranlagen und insbesondere heterogenkatalytische Prozesse, bei denen die Festbetten katalytisch wirksame Feststoffteilchen enthalten.

Bei anderen, insbesondere heterogenkatalytischen Prozessen, wie Suspensionskatalyse-, Fließbett- oder Wirbelschichtverfahren werden kleine katalytisch wirksame Feststoffteilchen in Flüssigkeiten oder Gasen fein verteilt und aus dem Produktstrom wieder abgetrennt.

Bei den erstgenannten Prozessen besteht das Problem, möglichst kleine Feststoffteilchen anzuwenden, um Diffusionshemmungen in den Feststoffteilchen entgegen zu wirken, andererseits aber noch eine ausreichende Durchlässigkeit für Flüssigkeiten oder Gase zu erlauben.

Bei den letztgenannten Prozessen, bei denen zur Verminderung von Diffusionshemmungen kleine Feststoffteilchen eingesetzt werden, besteht das Problem, diese möglichst vollständig aus dem Produktstrom abzutrennen.

Aus der WO-A-99/15292 ist eine Methode bekannt, die auf die Lösung dieser Probleme ausgerichtet ist. Es wird ein dreidimensionales Gerüst aus Metallfasern angefertigt, das mit sehr kleinen Feststoffteilchen, die nicht größer als 300 microns sind, beaufschlagt wird.

Diese Methode weist jedoch erhebliche Nachteile auf.

Die Teilchengröße ist auf sehr kleine Teilchen begrenzt.

Das Fasergerüst kann nur zu einem geringen Anteil mit Feststoffteilchen gefüllt werden, um noch eine ausreichende Durchlässigkeit für Flüssigkeiten oder Gase zu erhalten.

Außerdem ist man auf Formteile aus dreidimensionalen Fasergerüsten angewiesen, die der jeweiligen Anwendung anzupassen sind.

US-A-5620669 beschreibt Partikel-Faser-Agglomerate, die Faserbündel bzw. büschel mit fest anhaftenden Partikeln enthalten. Dabei liegen die eingesetzten Partikel in einem Größenbereich von < 40 µm, bevorzugt sogar < 15 µm. Diese geringen Partikelgrößen resultieren u.a. auch aus der Größe der eingesetzten Fasern, die ebenfalls sehr gering ist: 0,05 - 100 µm. Die elektronenmikroskopischen Aufnahmen; die bei starker Vergrößerung aufgenommen wurden, zeigen deutlich die geringe Größe der anhaftenden Partikel. Auf Grund der geringen Partikelgrößen kann bereits aus geometrischen Überlegungen heraus kein hoher Anteil an Katalysator im System erreicht werden, obwohl in der Beschreibung Anteile von bis zu 99 Vol.-% behauptet werden. Vorzugsweise wird laut Beschreibung ein Katalysator-Anteil von 30 - 90 Vol.-% eingesetzt, in den Beispielen sind die erzielten Katalysatoranteile nochmals deutlich geringer. So sind in Beispiel 2 am Ende nur ca. 25 Gew.-% Katalysator im System.

Es wird auch hier keine ausreichende Menge an Aktivmasse je Volumeneinheit der fertigen Partikel-Faser-Agglomerate erreicht. Ein hoher Anteil an Katalysator im Partikel-Faser-Verbund ist aber erforderlich, um eine hohe Volumenaktivität des Gesamtsystems bei deutlich reduziertem Druckverlust im Vergleich zur faserfreien Schüttung zu erzielen.

Nach den Lösungen des Standes der Technik gelingt es nicht, extrem hohe Anteile an Katalysator in das System "hineinzupacken", ohne dass es zu Problemen bezüglich Haftung der Partikel oder zum Partikelaustrag kommt.

Der vorliegenden Erfindung lag daher die Aufgabe zugrunde, den zuvor genannten Nachteilen abzuhelfen.

Demgemäß wurden neue Partikel-Faser-Agglomerate gefunden, welche dadurch gekennzeichnet sind, dass diese Fasern mit der Struktur von Einzelfasern, Faserbündeln, Faserbüscheln oder deren Gemische mit fest anhaftenden Partikeln enthalten oder aus diesen Fasern mit der Struktur von Einzelfasern, Faserbündeln, Faserbüscheln oder deren Gemische mit fest anhaftenden Partikeln bestehen. Erfindungsgemäß haben die Partikel, insbesondere Katalysator- oder Katalysatorträger-Partikel, eine Teilchengröße von 0,1 bis 3 mm.

Daraus gebildete Festbetten weisen elastische Eigenschaften auf.

Die erfindungsgemäßen Partikel-Faser-Agglomerate können wie folgt hergestellt werden.

### Herstellverfahren A

Fixierung von Partikeln mit Fasern unter Verwendung von Bindern

Die Fasern können in einer feuchten Masse, die Binder und gegebenenfalls Quellmittel enthält oder daraus besteht, dispergiert werden. Die erhaltene Masse kann z.B. durch Verrühren oder Verkneten mit den Partikeln auf die Partikel aufgebracht werden.

Die Trocknung der mit der feuchten, faserhaltigen Masse beaufschlagten Partikel kann nach verschiedenen üblichen Methoden, wie Gefriertrocknung, Vakuumtrocknung oder Trocknen unter Atmosphärendruck erfolgen. Der Druck kann dazu in einem Bereich von 0,01 bis 1,1 bar und die Temperatur in einem Bereich von (-50) bis 250°C , bevorzugt von 0 bis 200°C, besonders bevorzugt von 120 bis 180°C liegen.

Eine weitere Möglichkeit, die Partikel mit der feuchten, faserhaltigen Masse zu beaufschlagen besteht darin, die Masse auf die Partikel aufzusprühen. Dies kann unter gleichzeitiger Trocknung bei Temperaturen zwischen 50 bis 400°C, bevorzugt zwischen 100 bis 350°C , besonders bevorzugt zwischen 150 und 300°C erfolgen.

Die Kalzinierung der Partikel-Faser-Agglomerate kann bei Drucken im Bereich 0,01 bis 1,1 bar und Temperaturen im Bereich zwischen 50 bis 600°C, bevorzugt zwischen 100 bis 450°C besonders bevorzugt zwischen 150 bis 350°C durchgeführt werden.

Durch die Kalzinierung können flüchtige Binder oder Quellmittel teilweise oder vollständig aus den Partikel-Faser-Agglomeraten entfernt werden.

Die Partikel, insbesondere die Katalysator- oder Katalysatorträger-Partikel können die Form von Tabletten, Ringtabletten, Kalotten, oder Extrudaten wie körnige, strangförmige, sternförmige oder beliebig geformte Extrudate, splittförmige Teilchen, Sprühpulver, Sprühgranulat oder Granulat haben und es sind auch nach anderen Methoden hergestellte kugelförmige oder unregelmäßig geformte oder beliebig geformte Teilchen einsetzbar.

Die einsetzbaren Partikel können auch erfindungsgemäß hergestellte Partikel-Faser-Agglomerate sein, die entweder nach dem Verfahren A oder vorzugsweise nach dem Verfahren B hergestellt wurden.

### Herstellverfahren B

Zerkleinern von größeren Partikel-Faser-Agglomeraten

Zur Herstellung der größeren Partikel-Faser-Agglomerate können die Fasern in einer feuchten Masse aus Partikel-Pulver und gegebenenfalls Bindern und gegebenenfalls Quellmitteln dispergiert werden. Weiterhin können der feuchten Masse auch porenbildende Ausbrennstoffe wie z.B. Stearinsäure oder Holzmehl zugesetzt werden.

Die erhaltene feuchte Masse kann nach den üblichen Methoden, wie Auspressen mit Kolbenpressen, Extrudieren sowie durch mechanisches oder hydraulisches Verpressen zu größeren Partikel-Faser-Agglomeraten verformt und anschließend getrocknet oder partiell getrocknet werden.

Die Trocknung der erhaltenen feuchten Masse kann nach verschiedenen üblichen Methoden, wie Gefriertrocknung, Vakuumtrocknung oder Trocknen unter Atmosphärendruck erfolgen. Der Druck kann dazu in einem Bereich von 0,01 bis 1,1 bar und die Temperatur in einem Bereich von (-50) bis 250°C, bevorzugt von 0 bis 200°C, besonders bevorzugt von 120 bis 180°C liegen.

Die getrockneten oder partiell getrockneten größeren Partikel-Faser-Agglomerate können durch einen weiteren Pressvorgang, wie mechanisches hydraulisches oder isostatisches Verpressen (Nachpressen) weiter verfestigt werden. Bei dem Nachpressen kann die geometrische Form der größeren Partikel-Faser-Agglomerate verändert werden.

Zum Nachpressen können auch erfindungsgemäße Partikel-Faser-Agglomerate eingesetzt werden, die nach dem Herstellverfahren A oder B vorgefertigt wurden.

Für die Zerkleinerung der getrockneten oder partiell getrockneten oder nachgepressten größeren Partikel-Faser-Agglomeraten zu den gewünschten Partikel-Faser-Agglomeraten eignen sich Methoden oder Verfahren die überwiegend brechenden, zerschlagenden oder zerreißenden und wenig schneidenden Charakter haben, um Bruchflächen zu erzeugen, aus denen Fasern herausragen. Geeignete Zerkleinerungseinrichtungen sind z.B. Backen-, Rund-, Walzen-, Hammerbrecher, Hammer-, Prall-, Pralltellermühlen sowie Schlagund Stiftmühlen. Es können auch Kombinationen von verschiedenen Zerkleinerungseinrichtungen verwendet werden. Die Zerkleinerung kann in einer oder in mehreren Stufen erfolgen.

Durch Kalzinierung können gegebenenfalls vorhandene flüchtige Binder oder Quellmittel oder Ausbrennstoffe teilweise oder vollständig entfernt werden. Die Kalzinierung kann vor oder nach der Zerkleinerung erfolgen. Bei Anwendung des genannten Nachpressens der größeren Partikel-Faser-Agglomerate kann die Kalzinierung vor oder nach dem Nachpressen erfolgen.

Es ist auch möglich, die Kalzinierung in mehreren Stufen vorzunehmen, z.B. vor und nach dem Nachpressen sowie vor und nach der Zerkleinerung.

Die Kalzinierung in einer oder in mehreren Stufen kann bei Drucken im Bereich 0,01 bis 1,1 bar und Temperaturen im Bereich 50 bis 700°C, bevorzugt 100 bis 500°C, besonders bevorzugt 150 bis 350°C durchgeführt werden.

Als Partikel oder Partikelpulvern können in der Regel alle Elemente und deren Verbindungen sowie deren Legierungen oder Gemische eingesetzt werden, aus denen Feststoffteilchen hergestellt werden können, bevorzugt alle Elemente und deren Verbindungen sowie deren Legierungen oder Gemische aus denen Feststoffpartikel hergestellt werden können und bei deren Anwendung Diffusionsprozesse in den Feststoffteilchen eine Rolle spielen, insbesondere bevorzugt alle Elemente und deren Verbindungen sowie deren Legierungen und deren Gemische aus denen Feststoffteilchen hergestellt werden können und bei deren Anwendung Diffusionsprozesse und/oder katalytische Prozesse oder chemische Prozesse in oder an den Feststoffteilchen eine Rolle spielen.

Partikel oder Partikelpulver können beispielsweise Molekularsiebe oder Adsorbentien wie Zeolithe oder Aluminiumsilikate zur Gastrocknung und Gasreinigung, besonders bevorzugt Katalysatormaterialien oder Katalysatorträger sein, die gegebenenfalls mit katalytisch aktiven Komponenten durch Tränken oder Beschichten beaufschlagt werden können.

Das Katalysatormaterial kann beispielsweise Cu-, Zn-, Fe-, Ni-, Co-, V-, Mo-, W-, Si-, Mg-, Al-, Ma-, Mn-, Ba-, Cr-, Pd-, Pt-Verbindungen bevorzugt deren Oxide, Hydroxide, Karbonate oder Hydroxykarbonate, oder deren Gemische enthalten oder daraus bestehen.

Katalysatorträger können beispielsweise Siliziumdioxid, Aluminiumoxid, Magnesiumoxid, Titandioxid, Zirkondioxid, Zinkoxid oder deren Mischungen sowie deren Silikate, Aluminate, Karbide oder andere anorganische Verbindungen sein.

Als organische Partikel oder Partikelpulver seien genannt, Ionenaustauscherharze z.B. auf Basis von Phenol-, Styrol-, Acrylsäureharzen (Duolite™, Lewatite™, Amberlite™).

Die Fasern der erfindungsgemäßen Partikel-Faser-Agglomerate haben die Struktur von Einzelfasern, Faserbündeln, Faserbüscheln oder deren Gemische, sind jedoch keine Gewebe, Gestricke, Matten, Netzwerke, Vliese oder dreidimensionale Fasergerüste. Als Fasern eignen sich Glasfasern, Keramikfasern, Kohlenstofffasern, Graphitfasern, Polymerfasern, Metallfasern oder deren Gemische.

Das Material der Keramikfasern kann beispielsweise Siliziumcarbid, Aluminiumoxid, Aluminiumsilikat oder deren Gemische sein.

Als Polymerfasern kann man beispielsweise Polyamid-, Aramid-, Polyacrylfasern einsetzen.

Als Metallfasern kommen alle Metalle in Frage aus denen Fasern hergestellt werden können, wie zum Beispiel Kupfer, Aluminium, Nickel, Kobalt, Eisen, Wolfram, Silber oder deren Legierungen oder deren Gemische sowie Stahl in seinen verschiedenen Sorten.

Die Länge und der Durchmesser der einsetzbaren Fasern können in weiten Bereichen variiert werden. In der Regel haben die Fasern eine Länge von 0,1 bis 20 mm, bevorzugt von 0,5 bis 10 mm, besonders bevorzugt von 2 bis 6 mm und einem Durchmesser von 0,5 bis 100 microns, bevorzugt von 2 bis 50 microns, besonders bevorzugt von 5 bis 20 microns.

Als Binder eignen sich in der Regel alle bekannten Binder, wie anorganische Binder, beispielsweise Zement, Kalk, Gips, Al₂O₃, SiO₂ sowie deren Sole oder deren Gemische, oder organische Binder, beispielsweise Cellulose, Methylcellulose, Stärke, Polyethylenoxide Polyvinylalkohole, Polyurethane, Styrol-Butadien-Copolymere, Polyamid-Polyamin-Copolymere, Harze wie Epoxiharze, Acrylharze, Harnstoff-Formaldehyd-Harze, Melamin-Formaldehyd-Harze, Epichlorhydrinharze oder Phenolharze, Leime wie Phenolharzleime oder deren Gemische oder Gemische von anorganischen und organischen Bindern, wobei organische Binder teilweise oder nahezu vollständig oder vollständig aus den Partikel-Faser-Agglomeraten z.B. thermisch entfernt werden können.

Als Quellmittel eignen sich in der Regel alle bekannten Quellmittel, wie anorganische Quellmittel oder bevorzugt organische Quellmittel, beispielsweise Carboxymethyl-cellulose, Polyacryl-, Polymethacrylverbindungen oder deren Gemische, wobei organische Quellmittel teilweise, nahezu vollständig oder vollständig aus den Partikel-Faser-Agglomeraten z.B. thermisch entfernt werden können.

Wegen der Fixierung durch die Fasern werden die Feststoffteilchen vor mechanischen Beanspruchungen durch Rütteln oder Vibrationen geschützt und es wird eine Austragung von Feststoffteilchen vermieden, wenn Flüssigkeiten oder Gase ein aus den erfindungsgemäßen Partikel-Faser-Agglomerate gebildetes Festbett durchströmen.

Insbesondere eignen sich die erfindungsgemäßen Partikel-Faser-Agglomerate mit katalytisch aktiven Partikeln für Füllungen, die von Flüssigkeiten oder bevorzugt von Gasen durchströmt werden.

Für den Fall, dass die Partikel katalytisch aktiv sind, eignen sich die erfindungsgemäßen Partikel-Faser-Agglomerate in der Regel für alle suspensionskatalysierten oder bevorzugt heterogenkatalysierten Reaktionen, beispielsweise für Oxidationsreaktionen, Reduktionen, Redoxreaktionen, Konvertierungen, Hydrierungen, Hydroformulierungen, Abgasreinigungen, Dehydrierungen, Alkylierungen, Kondensationen, Crackprozesse, Veretherungen, Veresterungen, Isomerisierungen, selektive Hydrierungen oder Synthesen.

Je nach der Katalysatoranwendung und den dabei herrschenden Bedingungen können unterschiedliche Fasern ausgewählt werden.
Metallfasern eignen sich insbesondere für Anwendungen bei denen Wärme in das aus den erfindungsgemäßen Partikel-Faser-Agglomeraten bestehende Festbett eingebracht oder aus dem Festbett abgeführt wird.

Die erfindungsgemäßen Partikel-Faser-Agglomerate mit katalytisch aktiven Partikeln eignen sich als Katalysatorfüllungen für alle Reaktionsräume, die üblicherweise für Festbettkatalysatoren verwendet werden wie Rohre, Körbe oder aus Netzen bestehende Behälter und alle Reaktoren wie allen gängigen Reaktortypen, in denen Schüttungen oder z.B. wabenförmige Katalysatoren verwendet werden, beispielsweise zylindrische Reaktoren, Rohrbündelreaktoren, Querstromreaktoren und Reaktoren für Automobilkatalysatoren.

Für Anwendungen anstelle der üblicherweise für Suspensions-, Fließbett- oder Wirbelschicht-Verfahren eingesetzten Katalysatoren, kann ein aus den erfindungsgemäß hergestellten Partikel-Faser-Agglomeraten gebildetes Festbett verwendet werden, das von den jeweils in dem Verfahren zu behandelnden Flüssigkeiten oder Gasen durchströmt wird.

Mit den erfindungsgemäßen Partikel-Faser-Agglomeraten kann jeder beliebige Behälter oder Reaktor befüllt werden. Wegen der elastischen Eigenschaften, die sich durch aus den Feststoffteilchen herausragenden oder die Feststoffteilchen umgebenen Fasern ergeben, ist der Füllvorgang mit einem Ausstopfen der Behälter oder Reaktoren zu vergleichen. Die Feststoffteilchen können sehr klein sein. Sie werden durch die Fasern auf Distanz gehalten, so dass eine ausreichende Durchlässigkeit für Flüssigkeiten oder. Gase gewährleistet werden kann.

Die erfindungsgemäßen Partikel-Faser-Agglomerate mit katalytisch aktiven Partikeln halten durch ihren Faseranteil die Katalysatorteilchen fixiert auf Distanz und füllen den Katalysatorraum bei entsprechendem Stopfungsgrad so aus, daß durch die Flexibilität der Fasern der Katalysatorraum zu jeder Zeit annähernd gleichmäßig mit Katalysator ausgefüllt ist. Dies minimiert den Effekt, daß die am Katalysator umzusetzenden Verbindungen ohne Kontakt mit dem Katalysator an diesem ohne Reaktion vorbeiströmen (By-pass). Die erfindungsgemäßen Partikel-Faser-Agglomerate sind vorteilhaft in stationären, insbesondere in mobilen Anwendungen wie Katalysatoren für Brennstoffzellen und Motorenabgasreinigung.

Der Faseranteil der erfindungsgemäßen Partikel-Faser-Agglomerate kann in weiten Grenzen variiert werden. Er liegt in der Regel im Bereich von 0,1 bis 20 Gew.-%, bevorzugt 0,2 bis 10 Gew.-%, besonders bevorzugt 0,5 bis 5 Gew.-%.

### Beispiele

Herstellverfahren A

### Beispiel 1 A

In. 1 L VE- Wasser wurden bei Raumtemperatur, unter Rühren in einem Becherglas, zunächst 7 g Polyethylenoxid (Alkox™ E-160, Meisei Chemical Works LTD., Kyoto, Japan ) und danach 7 g Polyacrylat (Aqualic™ CAW3, BASF AG Ludwigshafen) gelöst. Nach einer Rührzeit von 15 Minuten wurde die zähe Flüssigkeit in einen Sigma-Kneter (Werner & Pfleiderer) überführt. Nach Zugabe von 300 g Aluminium-sol (Disperal™ Sol P2 , Condea) und einer Knetzeit von 5 Minuten wurden 20 g Kohlenstofffasern (Sigrafil™ SFC-3-GLB SGL Technik GmbH, 86405 Meitingen) innerhalb von 15 Minuten in die Masse eingeknetet.

In einem weiteren Sigma-Kneter (Werner & Pfleiderer) wurden 2400 g eines Katalysatorsplitts, bestehend aus 60 Gew.-% Kupferoxid, 30 Gew.-% Zinkoxid und 10 Gew.-% Aluminiumoxid, Siebfraktion 0,15 bis 0,4 mm, mit 360 g VE- Wasser befeuchtet. Nach einer Mischzeit im Kneter von 5 Minuten wurde die oben beschriebene faserhaltige Knetmasse dem Kneter zugeführt, der den angefeuchteten Katalysatorsplitt enthielt. Nach einer Mischzeit von 5 Minuten wurde die erhaltene Masse aus dem Kneter entleert und in einem Trockenschrank bei 120°C über 5 Stunden getrocknet. Danach wurde in einem Umluftofen die getrocknete Masse 1 h bei 300°C bei Atmosphärendruck kalziniert.

Die so erhaltenen Partikel-Faser-Agglomerate enthielten 93,42 Gew.-% Katalysator-splitt, 5,8 Gew.-% Alumiumoxid und 0,78 Gew.-% Kohlenstofffasern.

Durch Ausstopfen eines zylindrischen Gefäßes per Hand, mit einem Stempel, wurde ein Füllgewicht von 700 g/l erhalten.

### Beispiel 2 A

### Beispiel 2 A entspricht bis auf eine Ausnahme in allen Einzelheiten dem Beispiel 1 A

Die Ausnahme betrifft den Typ der eingesetzten Fasern. Statt der Kohlenstofffasern wurden im Beispiel 2 A 30 g Edelstahlfasern (Bekishield™ GR 90/CO2/5 PVA) Bekaert Faser Vertriebs GmbH, 65510 Idstein) eingesetzt.

Die so erhaltenen Partikel-Faser-Agglomerate enthielten 93,04 Gew.-% Katalysator-splitt, 5,8 Gew.-% Alumiumoxid und 1,16 Gew.-% Stahlfasern.

Durch Ausstopfen eines zylindrischen Gefäßes per Hand, mit einem Stempel, wurde ein Füllgewicht von 570 g/l erhalten.

## Patentansprüche

1. Partikel-Faser-Agglomerate, **dadurch gekennzeichnet, daß** diese Agglomerate Fasern mit der Struktur von Einzelfasern, Faserbündeln, Faserbüscheln oder deren Gemische mit fest anhaftenden Partikeln einer Teilchengröße von 0,1 bis 3 mm enthalten.

2. Partikel-Faser-Agglomerate nach Anspruch 1, **dadurch gekennzeichnet, daß** man als Fasern Glasfasern, Keramikfasern, Kohlefasern, Graphitfasern, Polymerfasern, Metallfasern oder deren Gemische einsetzt.

3. Partikel-Faser-Agglomerate nach Anspruch 1 oder 2, **dadurch gekennzeichnet, daß** die Partikel inerte Masse, katalytisch aktive Masse oder deren Gemische enthalten.

4. Verfahren zur Herstellung von Partikel-Faser-Agglomerate nach einem der Ansprüche 1 bis 3, **dadurch gekennzeichnet, daß** man a) Fasern mit Binder vermischt und mit Partikeln in Verbindung bringt oder b) Fasern und Partikel-Pulver, gegebenenfalls unter Zusatz von Binder, mischt, zu größeren Agglomeraten verpresst und diese bricht oder zerschlägt.

5. Verwendung von Partikel-Faser-Agglomerate nach einem der Ansprüche 1 bis 3 als Katalysatoren.

6. Verwendung von Partikel-Faser-Agglomerate nach einem der Ansprüche 1 bis 3 als Katalysatoren für mobile Anwendungen.

7. Verwendung von Partikel-Faser-Agglomerate nach einem der Ansprüche 1 bis 3 als Katalysatoren für Brennstoffzellen.

8. Verwendung von Partikel-Faser-Agglomerate nach einem der Ansprüche 1 bis 3 als Katalysatoren für die Abgasreinigung.

## Claims

1. Particle-fiber agglomerates comprising fibers having the structure of individual fibers, fiber bundles, fiber tufts or mixtures thereof with firmly adhering particles of from 0.1 to 3 mm in size.

2. Particle-fiber agglomerates as claimed in claim 1, wherein the fibers are glass fibers, ceramic fibers, carbon fibers, graphite fibers, polymer fibers, metal fibers or mixtures thereof.

3. Particle-fiber agglomerates as claimed in claim 1 or 2, wherein the particles comprise inert material, catalytically active material or mixtures thereof.

4. A process for preparing particle-fiber agglomerates as claimed in any of claims 1 to 3, which comprises a) fibers being mixed with a binder and associated with particles or b) fibers and particle powder being mixed in the presence or absence of a binder, pressed to form larger agglomerates and these being broken or hammered to pieces.

5. The use of particle-fiber agglomerates as claimed in any of claims 1 to 3 as catalysts.

6. The use of particle-fiber agglomerates as claimed in any of claims 1 to 3 as catalysts for mobile applications.

7. The use of particle-fiber agglomerates as claimed in any of claims 1 to 3 as catalysts for fuel cells.

8. The use of particle-fiber agglomerates as claimed in any of claims 1 to 3 as catalysts for exit gas cleaning.

## Revendications

1. Agglomérats de particules et fibres, **caractérisés en ce que** ces agglomérats contiennent des fibres ayant la structure de fibres simples, de faisceaux de fibres, de flocons de fibres ou de leurs mélanges avec des particules adhérant de manière solide d'une taille de particule de 0,1 à 3 mm.

2. Agglomérats de particules et fibres, **caractérisés en ce que**, comme fibres, on met en oeuvre des fibres de verre, des fibres de céramique, des fibres de carbone, des fibres de graphite, des fibres de polymère, des fibres métalliques ou leurs mélanges.

3. Agglomérats de particules et fibres, suivant l'une des revendications 1 et 2, **caractérisés en ce que** les particules contiennent une masse inerte, une masse catalytiquement active ou leurs mélanges.

4. Procédé de préparation d'agglomérats de particules et fibres suivant l'une des revendications 1 à 3, **caractérisé en ce que** a) on mélange aux fibres du liant et on amène le tout en contact avec des particules ou b) on mélange fibres et poudre de particules, éventuellement avec addition de liant, on comprime en agglomérats plus grands et on brise ou fragmente ceux-ci.

5. Utilisation d'agglomérats de particules et fibres suivant l'une des revendications 1 à 3, comme catalyseurs.

6. Utilisation d'agglomérats de particules et fibres suivant l'une des revendications 1 à 3, comme catalyseurs pour des applications mobiles.

7. Utilisation d'agglomérats de particules et fibres suivant l'une des revendications 1 à 3, comme catalyseurs pour des piles à combustible.

8. Utilisation d'agglomérats de particules et fibres suivant l'une des revendications 1 à 3, comme catalyseurs pour l'épuration de gaz d'échappement.
